# EUROPEAN PATENT APPLICATION

(11) **EP 4 116 479 A1**
(43) Date of publication of application: **11.01.2023**
(21) Application number: 21761401.5
(22) Date of filing: 26.02.2021
(51) Int. Cl.: D06F 39/02, D06F 33/57

(54) **DETERGENT RECOMMENDATION METHOD AND DEVICE**

(30) Priority: 27.02.2020 CN 202010124811
(71) Applicant: Qingdao Haier Washing Machine Co., Ltd., Qingdao, Shandong 266101 (CN); HAIER SMART HOME CO., LTD., Laoshan District Qingdao Shandong 266101 (CN)
(72) Inventor: LI, Junwei, Qingdao, Shandong 266101 (CN); MENG, Yi, Qingdao, Shandong 266101 (CN); WANG, Xiaowei, Qingdao, Shandong 266101 (CN); ZHANG, Tao, Qingdao, Shandong 266101 (CN); ZHAO, Fei, Qingdao, Shandong 266101 (CN)
(74) Representative: Barker Brettell LLP
(86) International application number: PCT/CN2021/078043
(87) International publication number: WO 2021/170066

(57) **Abstract**

The present invention belongs to the technical field of smart homes, and particularly relates to a detergent recommendation method and equipment. The invention aims to solve the problems of various adverse effects caused by inappropriate detergent usage of user such as clothes damage and harm to human health. The detergent recommendation method of the present invention includes: obtaining usage numbers respectively corresponding to various types of washing programs used by a user where the various types of washing programs respectively correspond to different types of detergents, selecting N types of washing programs with a maximum usage number from various types of washing programs according to the usage numbers, and pushing a prompt information of detergents respectively corresponding to the N types of the washing programs to the user, and can preferentially recommend the detergent suitable for the washing program with higher operating frequency to the user based on the usage number of the user using different washing programs, so that the user can use suitable detergent for washing and thus avoid various adverse effects caused by inappropriate selection of detergent.

## Description

### TECHNICAL FIELD

The present application relates to the technical field of smart homes and, in particular, to a detergent recommendation method and equipment.

### BACKGROUND

With the continuous development of the washing machine industry, washing machines have more and more functions. In order to meet the usage demands of users, washing machines are developing in the direction of intellectualization.

In the prior art, the washing program for the intelligent washing machine may include various types, such as quick washing, mixed washing or standard washing. Different washing programs correspond to different washing parameters, which can meet the personalized demand of users.

However, for different washing programs, if the selected detergent is unsuitable, there may be various problems, such as clothing damage, stains which cannot be completely removed, or residual detergent caused by incomplete rinsing. Therefore, how to accurately recommend suitable detergent for users has become an urgent problem to be solved.

### SUMMARY

The purpose of the present application is to provide a detergent recommendation method and equipment. Several types of washing programs with a maximum usage number and corresponding detergents are determined by obtaining usage numbers of various types of washing programs used by a user, and a prompt information of detergent is pushed to the user, which can solve the problems of various adverse effects caused by inappropriate detergent usage of user such as clothes damage and harm to human health.

In a first aspect, the present application discloses a detergent recommendation method, including:
obtaining usage numbers respectively corresponding to various types of washing programs used by a user, where the various types of washing programs respectively correspond to different types of detergents;
selecting N types of washing programs with a maximum usage number from the various types of washing programs according to the usage numbers, and pushing a prompt information of detergents respectively corresponding to the N types of the washing programs to the user, where the N is a positive integer greater than or equal to 1.

Based on the above technology content, obtaining the usage numbers of various types of washing programs used by a user, selecting several types of washing programs with the maximum usage number according to the usage numbers, and pushing the prompt information of detergents corresponding to several washing programs with the maximum usage number to the user, achieve that the prompt information of the detergent is pushed to the user according to the frequency of the user using different types of washing programs.

Optionally, each type of washing programs includes at least one washing program, and after the pushing prompt information of detergents respectively corresponding to the N types of washing programs to the user, the method further includes:
for each type of washing program in the N types of washing programs, selecting a washing program with the maximum usage number from each type of the washing program, and pushing the washing program and a prompt information of a detergent corresponding to each type of the washing program to the user at one time.

By selecting the washing programs with the maximum usage number and pushing the washing programs with the maximum usage number and the prompt information of corresponding detergent to the user, the accuracy of information pushing is further improved and the washing demand of the user is met with higher probability.

Optionally, before the obtaining the usage numbers respectively corresponding to various types of washing programs used by the user, the method further includes:
receiving an account information input by the user;
the obtaining the usage numbers respectively corresponding to various types of washing programs used by the user, including:
   obtaining the usage numbers respectively corresponding to various types of washing programs under the account information after the account information is verified successfully.

By obtaining the usage numbers of various types of washing programs by the account information input by the user, a specific implementation of obtaining the usage numbers of various types of washing programs is further provided.

Optionally, before obtaining the usage numbers respectively corresponding to various types of washing programs under the account information, the method further includes:
obtaining all washing programs corresponding to the account information;
dividing the washing programs applicable to a same type of detergent into a same type to obtain various types of washing programs according to a detergent applicable to the washing program.

By classifying of all washing programs according to the type of corresponding detergent, it is further facilitated to count up the usage numbers of various types of washing programs.

Optionally, after the receiving the account information input by the user, the method further includes:
after the account information is successfully verified, then receiving an identification information of currently used detergent that is input by the user;
pushing a purchase link of the detergent to the user according to the identification information.

By pushing of the purchase link of the detergent to the user through the identification information of the detergent input by the user, it is further convenient for the user to purchase the detergent and supplement the detergent in time.

Optionally, after the receiving the identification information of the currently used detergent that is input by the user, the method further includes:
pushing a list of washing programs applicable to the detergent to the user according to the identification information.

By pushing of the list of washing programs to the user through the identification information of the detergent, it is further convenient for the user to select a suitable washing program from the list of washing programs.

Optionally, various types of washing programs include at least two of the following: an ordinary washing type, a low-foaming and easy-rinsing type, a business washing type, a baby-friendly washing type and a sterilization washing type.

In a second aspect, the present application discloses a detergent recommendation device, including:
an obtaining module, configured to obtain usage numbers respectively corresponding to various types of washing programs used by a user, where the various types of washing programs respectively correspond to different types of detergents;
a first pushing module, configured to select N types of washing programs with a maximum usage number from the various types of washing programs according to the usage numbers and push a prompt information of detergents respectively corresponding to the N types of washing programs to the user.

Base on the above technical content, the usage numbers of different types of washing programs used by the user is obtained by the obtaining module, the washing programs with the maximum usage number are selected by the first pushing module according to the usage numbers, and the prompt information of detergents corresponding to several washing programs with the maximum usage number is pushed to the user, thereby achieving that the prompt information of the detergent is pushed to the user according to the frequency of the user using different types of washing programs.

Optionally, the detergent recommendation device further includes:
a selecting module configured to, for each type of washing program in the N types of washing programs, select a washing program with the maximum usage number from each type of washing program, and push the washing program and a prompt information of a detergent corresponding to each type of washing program to the user at one time.

The washing program with the maximum usage number is selected by the selecting module, and the washing program with the maximum usage number and the prompt information of the corresponding detergent are simultaneously pushed to the user, so that the accuracy of information pushing is further improved, and the washing demand of the user is met with higher probability.

Optionally, the detergent recommendation device further includes:
a first receiving module, configured to receive an account information input by the user;
a first pushing module, specifically configured to:
   acquire the usage numbers respectively corresponding to various types of washing programs under the account information after the account information is successfully verified.

The account information input by the user is received by the first receiving module, and the usage numbers of various types of washing programs are obtained by obtaining the account information input by the user through the first pushing module, so that a specific implementation mode for obtaining the usage numbers of various types of washing programs is further provided.

Optionally, the first pushing module is specifically configured to:
obtain all washing programs corresponding to the account information;
divide the washing programs applicable to a same type of detergent into a same type to obtain various types of washing programs according to a detergent applicable to the washing program.

All washing programs are classified according to corresponding detergent type through the first pushing module, thereby further facilitating to count up the usage numbers of various types of washing programs.

Optionally, the detergent recommendation device further includes:
a second receiving module, configured to receive an identification information of currently used detergent that is input by the user after the account information is successfully verified;
a second pushing module, configured to push a purchase link of the detergent to the user according to the identification information.

The identification information of the currently used detergent is received through the second receiving module, and the purchase link of the detergent is pushed to the user through the second pushing module according to the identification information of the detergent input by the user, which further facilitates the user to purchase the detergent and supplement the detergent in time.

Optionally, the detergent recommendation device further includes:
a third pushing module, configured to push a list of washing programs applicable to the detergent to the user according to the identification information, where the list of washing programs is obtained by screening according to various washing programs used by the user.

The list of washing programs is pushed to the user by the third pushing module according to the identification information of the detergent, thereby further facilitating the user to select a suitable washing program from the list of washing programs.

Optionally, various types of washing programs include at least two of the following: an ordinary washing type, a low-foaming and easy-rinsing type, a business washing type, a baby-friendly washing type and a sterilization washing type.

In a third aspect, the present application discloses a detergent recommendation equipment, including: a processor and a memory; where
the memory is configured to store program codes;
the processor is configured to invoke the program codes stored in the memory to execute the method of the first aspect.

In a fourth aspect, the present application discloses a computer-readable storage medium in which instructions are stored, and when the instructions are run on a computer, the computer performs the method of the first aspect.

In a fifth aspect, the present application discloses a computer program including program codes, where the program codes execute the method of the first aspect when the computer program is run by a computer.

In combination with the above technical schemes, the present application provides a detergent recommendation method and equipment. By obtaining the usage numbers respectively corresponding to various types of washing programs used by a user, where the various types of washing programs respectively correspond to different types of detergents; and selecting N types of washing programs with a maximum usage number from the various types of washing programs according to the usage numbers, and pushing a prompt information of detergents respectively corresponding to the N types of washing programs to the user, it is possible to preferentially recommend the detergent suitable for the washing program with higher operating frequency to the user according to the usage numbers of the user for different washing programs, so that the user may use suitable detergent for washing and thus avoid various adverse effects caused by inappropriate selection of detergent.

### BRIEF DESCRIPTION OF DRAWINGS

FIG. 1 is a schematic diagram of an application scenario provided by an embodiment of the present application;
FIG. 2 is a schematic flowchart of a detergent recommendation method provided by an embodiment of the present application;
FIG. 3 is a schematic diagram of an APP interface provided by an embodiment of the application;
FIG. 4 is a schematic flowchart of a detergent recommendation method provided by another embodiment of the application;
FIG. 5 is a structural schematic diagram of a detergent recommendation device provided by an embodiment of the present application;
FIG. 6 is a structural schematic diagram of a detergent recommendation device provided by another embodiment of the application; and
FIG. 7 is a structural schematic diagram of the hardware of a detergent recommendation equipment provided by another embodiment of the application.

### DESCRIPTION OF EMBODIMENTS

The application scenarios described in the embodiments of the present application are intended to illustrate the technical solutions of the embodiments of the present application more clearly, and do not constitute a limitation to the technical solutions provided by the embodiments in the present application. It is known to persons of ordinary skill in the art that with the emergence of new application scenarios, the technical solutions provided by the embodiments of the present application are also applicable to similar technical problems.

With the continuous development of the washing machine industry, washing machines have more and more functions. As an essential household appliance, users have higher and higher demand for the functions, washing quality, intelligence and other aspects of washing machines. The intelligent washing machine is configured with a variety of washing programs. Each user has own washing habits. Some people are used to adopting quick washing, some people are used to adopting mixed washing, and others are used to adopting standard washing. However, washing parameters of different washing programs are different. If a laundry detergent used is inappropriate, it may lead to stain residue due to incomplete washing, incomplete rinsing due to more foam, etc. For example, the quick washing, which has only one washing and one rinsing, is relatively suitable for clothes with low degree of dirt, and is suitable for washing with a low-foaming laundry detergent. If a high-foaming laundry detergent is used, a lot of foam will be produced, resulting in incomplete rinsing and more laundry detergent residue. For another example, for the mixed washing, users often wash cotton clothes, chemical fiber clothes, wool clothes and hemp clothes by mixing together, while clothes made of different materials are suitable for different detergents. If the detergent used is inappropriate, it may cause damage to clothes. Therefore, the present embodiments provide a detergent recommendation method and equipment.

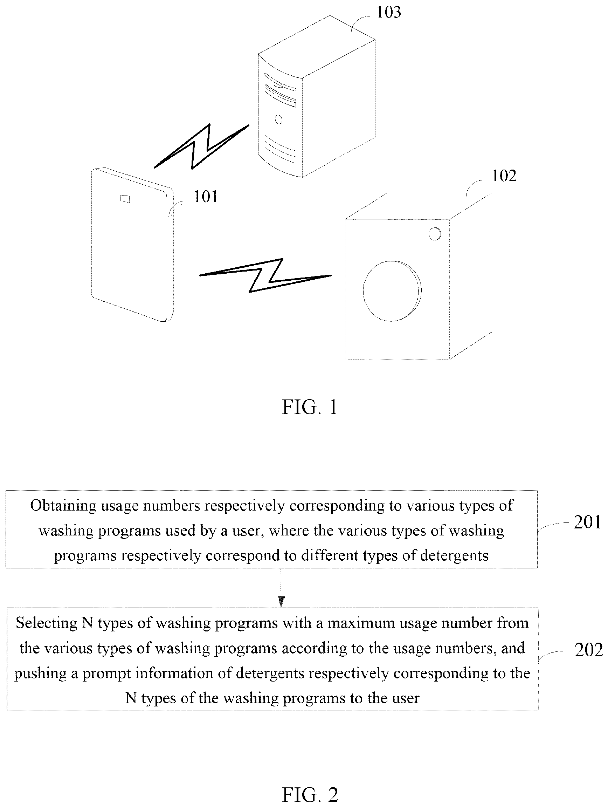

FIG. 1 is a schematic diagram of an application scenario provided by an embodiment of the present application. As shown in FIG. 1, a terminal device 101 may perform a data communication with a washing machine 102; and the terminal device 101 may display the operation state information of the washing machine 102, such as a currently performing washing program, and may also record the selection of each washing program to form a washing record. It can be understood that the washing record may be stored locally in the terminal device 101, and may also be stored in a server 103 in order to save hardware resource of the terminal device 101. Optionally, the terminal device 101 may be a device capable of installing and running programs, such as a mobile phone, a tablet, a personal computer, etc. The washing machine 102 may be various types of washing machines, and may include multiple washing programs.

In a specific implementation, the terminal device 101 may obtain the information of a washing program supported by the washing machine 102, and the terminal device 101 may form a washing record for each washing of the user. The terminal device may obtain a usage number of each washing program of the washing machine 102 according to the washing record or by directly obtaining the operation information of the washing program from the washing machine 102, and then recommend a detergent according to the usage number.

In this embodiment, through counting of washing programs used by each user, a program is introduced to the user according to the washing program used by the user most frequently, the problems caused by the use of inappropriate laundry detergent are displayed, and the laundry detergent suitable for the washing program is recommended, thereby allowing the user to use a correct or suitable laundry detergent and thus avoid the problem of damage to clothes due to inappropriate use of laundry detergent.

The technical solution of the present invention will be described in detail below with specific embodiments. The following specific embodiments may be combined with each other, and the same or similar concepts or processes may not be repeated in some embodiments.

FIG. 2 is a schematic flowchart of a detergent recommendation method provided by an embodiment of the present application. As shown in FIG. 2, the method includes:
step 201, obtaining usage numbers respectively corresponding to various types of washing programs used by a user, where the various types of washing programs respectively correspond to different types of detergents.

The executive body of the embodiment may be a server or the terminal device shown in FIG. 1.

In practical applications, the washing machine is provided with multiple washing programs for the user to select. For example, if the laundry to be washed is only slightly stained, the user may select quick washing to save time, and if the laundry to be washed is a baby product and needs special care, the user may select a baby washing.

There may be multiple corresponding relationships between a person and a washing machine. The same washing machine may be used by more than one person, and the same person may use multiple washing machines. Different models of washing machines may have different names for a washing program with the same function. For example, large-object washing and bed-sheet washing set in the washing machine actually refer to the washing program with the same function. Different users have different family structures and washing habits, so the selected washing programs will be different, and the usage number will also be different.

In face of many washing programs, in order to recommend detergent reasonably, the washing programs may be divided into several types according to the type of detergent applicable to a washing program. Specifically, the washing programs applicable to the same type of detergent may be classified into one type. For example, a washing program applicable to a low-foaming and easy-rinsing type detergent is classified as a low-foaming and easy-rinsing type washing program, and a washing program applicable to a natural and non-irritating type detergent is classified as a baby-friendly type washing program.

The usage number is counted based on the divided various types of washing programs for different types of detergents. Optionally, the washing programs may be divided into the following types: an ordinary washing type, a low-foaming and easy-rinsing type, a business washing type, a baby-friendly washing type and a sterilization washing type.

In this embodiment, there are several ways to obtain the usage number of washing program. According to a user's account, the usage number of washing program under this account may be counted. The operation record of the washing machine may also be obtained from the associated washing machine through the terminal device, and the usage numbers of different washing programs may be counted up from the operation record. The embodiment is not limited thereto. After obtaining the usage numbers of various washing programs, the sum of the usage numbers of respective washing programs corresponding to different types of washing programs may be counted as the usage number of this type of washing program. Optionally, the counting of the usage number of washing program may be the counting of the usage number within a preset period, for example, it may be the usage number of last one month, last three months, or last six months.

In combination with Table 1 below, the results in Table 1 may be obtained according to the washing record of users within the last one month.

| Various types of washing programs | Washing program | Usage number of each washing program (within the last one month) | Usage number of each type (within the last one month) |
|---|---|---|---|
| Ordinary washing type | Strengthened washing | 3 | 14 |
| | Standard washing | 2 | |
| | Mixed washing | 7 | |
| | Large-obj ect washing | 2 | |
| Baby-friendly washing type | Baby washing | 8 | 12 |
| | Children washing | 4 | |
| Sterilization washing type | Anti-allergy washing | 3 | 5 |
| | Outdoor clothes washing | 2 | |
| | Pasteurization washing | 0 | |
| Business washing type | Shirt washing | 4 | 5 |
| | Suit washing | 1 | |
| Low-foaming and easy-rinsing type | Quick washing | 16 | 16 |

As shown in Table 1, for the ordinary washing type, the usage number for strengthened washing is 3, the usage number for standard washing is 2, the usage number for mixed washing is 7, the usage number for large-object washing is 2, and the total usage number of this type is 14. For the baby-friendly washing type, the usage numbers for baby washing and children washing are 8 and 4, respectively, and the total usage number of this type is 12. For the sterilization washing type, the usage numbers for anti-allergy washing, outdoor clothes washing and pasteurization washing are 3, 2, and 0, respectively, and the total usage number of this type is 5. For the business washing type, the usage numbers for shirt washing and suit washing are 4 and 1, respectively, and the total usage number of this type is 5. For the low-foaming and easy-rinsing type, the usage number for quick washing is 16, and the total usage number of this type is 16.

Step 202, N types of washing programs with a maximum usage number are selected from various types of washing programs according to the usage numbers, and a prompt information of detergents respectively corresponding to the N types of the washing programs is pushed to the user; and N is a positive integer greater than or equal to 1.

After the usage numbers respectively corresponding to different types of washing programs are counted, various types of washing programs may be ranked from high to low according to respective usage numbers. The prompt information of the detergent corresponding to the first or top several washing program types is selected and pushed to the user.

Optionally, the prompt information of the detergent may include a name of detergent, and instructions of detergent. In order to facilitate the user to purchase the detergent, the prompt information may further include a purchase link of the detergent.

Optionally, since the type of washing program is summarized according to the washing program and then the user is not familiar with it enough, so the specific washing program with higher usage number that the user is more familiar with in this type may be displayed together with the corresponding prompt information of detergent. Each type of washing program includes at least one washing program, and after the prompt information of detergents respectively corresponding to the N types of washing programs is pushed to the user, the method further includes:
for each type of washing program in the N types of washing programs, selecting a washing program with the maximum usage number from this type of the washing program, and pushing the washing program and the prompt information of detergent corresponding to this type of the washing program to the user at one time.

During the display process, an amount for display may be selected. For example, the washing programs with the maximum usage number, which respectively correspond to the washing program types with the top three usage numbers, and their detergent prompt information may be displayed.

In a specific implementation, taking the screening of three washing programs as an example, the detergent recommendation process may include the following steps:
step 1, counting up the total usage number of respective washing programs under each washing type, and ranking them;
step 2, judging whether there is a special washing type (other washing types except the ordinary washing type);
step 3, if there is the special washing type, it is necessary to screen special washing types accounting for the top two rank according to a ranking obtained in step 1, and if there are multiple types with the same rank, it is random;
step 4, selecting one washing program with the maximum usage number for each special washing type, and if multiple washing programs have the same usage number, then randomly;
step 5, if two special types of washing programs are screened out, then screening one washing program with the highest rank from conventional washing programs to make up three;
step 6, if there is only one special washing type, then screening the top two washing programs from the ordinary washing programs according to the usage number to make up three washing programs;
step 7, if there is no special type of washing program, then screening the top two washing programs from the ordinary washing programs according to the usage number to make up three;
step 8, if the number of the washing programs counted according to the above rule is less than three, then pushing out all screened washing programs;
step 9, if there is no any washing program, then returning an empty array;
step 10, if there is a washing program of any user that is not in the classification list, then discarding it (e.g., a single dehydration program).

In practical application, as shown in Table 1, the washing programs used most frequently by the user within the last one month may be counted up, and the top three programs used most frequently are displayed in an APP interface. A display title may be: host, your commonly used washing program types include: the low-foaming and easy-rinsing type, the ordinary washing type, and the baby-friendly washing type. Of course, after determining of the washing type used more frequently, the washing program with the maximum usage number in each type may be selected as a representative. For example, the quick washing in the low-foaming and easy-rinsing type may be used as a representative, the mixed washing with the maximum usage number in the ordinary washing type may be used as a representative of this type, and the baby washing in the baby-friendly washing type may be used as a representative of this type.

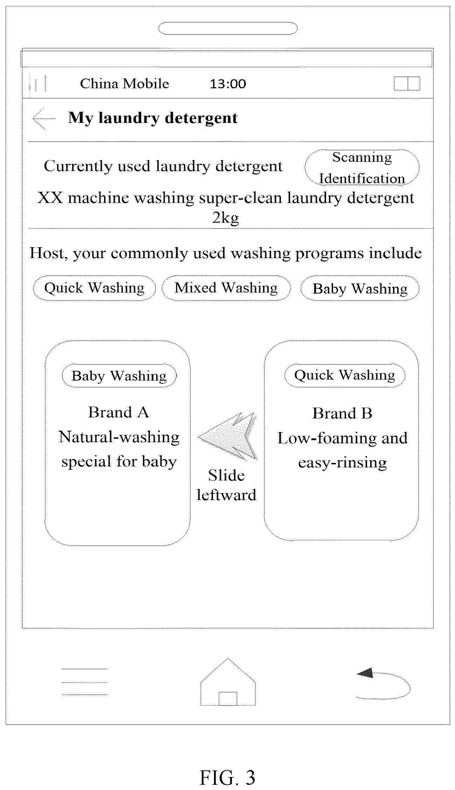

In the APP interface, various washing programs as representatives may be displayed, such as the quick washing, the mixed washing and the baby washing. Specifically, FIG. 3 is a schematic diagram of an APP interface provided by an embodiment of the application. As shown in FIG. 3, a button for "Scanning Identification" is displayed in an upper area of the interface, and after a click from a user is received, an identification code for the user's detergent product may be scanned, for example, a two-dimensional code or a bar code is scanned to show the user instructions of detergent, a purchase link of detergent and other prompt information. It is also possible to provide the user with a list of recommended washing programs in combination with the user's washing record. In a lower area of the interface, it is possible to display "Host, your commonly used washing programs include the quick washing, the mixed washing and the baby washing". Furthermore, the prompt information of the detergent applicable to each program is displayed. A display mode may be in the form of carousel or simultaneous display. The embodiment is not limited thereto.

Optionally, the following two kinds of contents related to the quick washing with the maximum usage number may also be displayed on the interface at the same time:
I. Pictures and texts related to the quick washing, for example, showing the problems that may occur in the quick washing: too much foam for the laundry detergent, incomplete rinsing, and the advantages of the laundry detergent suitable for quick washing: low foam design, easy rinsing, and showing capable of be used with the pictures;
II. A link of the laundry detergent suitable for quick washing program. After the link is clicked by the user, it is possible to jump to a purchase interface for buying the laundry detergent. The link indicates the advantages of the pushed laundry detergent, such as low foaming and easy rinsing.

Alternatively, the contents related to three types of washing programs of quick washing, mixed washing and baby washing, as well as the links to the recommended detergent are played in turn on the APP side.

In the detergent recommendation method provided by the embodiment, the usage numbers respectively corresponding to various types of washing programs used by the user are obtained; various types of washing programs correspond to different kinds of detergents respectively; according to the usage number, N types of washing programs with the maximum usage number are selected from various types of washing programs, and the prompt information of the detergent respectively corresponding to the N types of washing programs is pushed to the user, which may preferentially recommend to the user a detergent applicable to the washing program with relatively high operating frequency based on the usage numbers of the user using different washing programs, so that the user may use suitable detergent for washing and thus avoid various adverse effects caused by inappropriate selection of detergent.

Optionally, if the user is a newly registered user, and the usage number of washing program in the washing record is too small to form a basis for recommendation, then the result of big data statistics may be pushed to the user. Therefore, after step 202, the method may further include:
if the usage number of washing program of the user in a preset period is less than a preset threshold value, then the prompt information of a common washing program obtained by big data statistic and the detergent corresponding to the common washing program is pushed to the user.

Specifically, if the user has not used a washing machine in the last month, the washing program that 80% of users like to use may be displayed in the APP interface, that is, the washing program that 80% of users use most frequently.

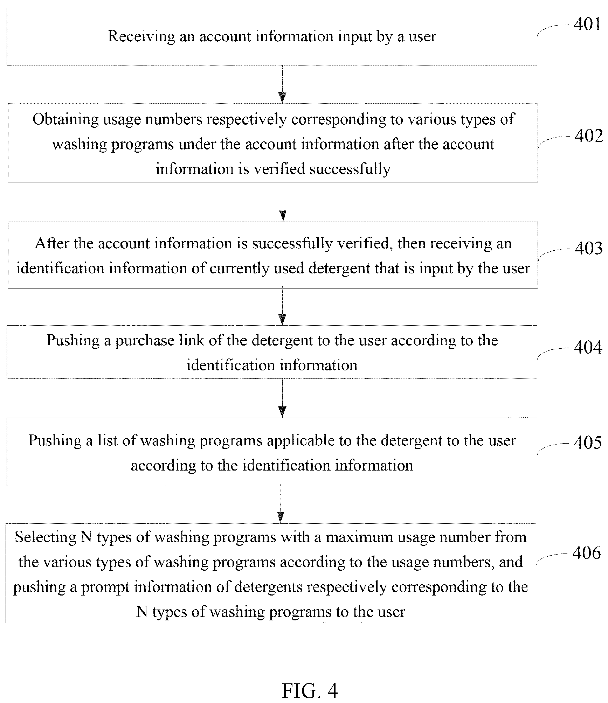

FIG. 4 is a schematic flowchart of the detergent recommendation method provided by another embodiment of the application. As shown in FIG. 4, the method includes:
step 401, receiving an account information input by a user.

In practical application, the account information may take many forms, for example, it may be user's name and password, and it may also be a voiceprint, a head portrait, and a fingerprint of the user that are collected, which are not limited in this embodiment.

Step 402, the usage numbers respectively corresponding to various types of washing programs under the account information are obtained after the account information is verified successfully.

For example, in the case that one intelligent washing machine is used by all residents (such as co-tenants) in one family or one house, each user may select a washing program to control the washing machine through an APP application installed on a terminal device (such as a mobile phone). When the user inputs the account information at the APP terminal and verifies it successfully, the user may control the washing machine through the operation of the APP, for example, the user may select a washing program. The APP on the mobile phone may record the selected content and form a washing record of the user.

After the account information is verified successfully, the terminal device may obtain the washing record under the account information and obtain the usage numbers respectively corresponding to various types of washing programs.

Optionally, before the usage numbers respectively corresponding to various types of washing programs under the account information are obtained, the method may include:
step 4021, obtaining all washing programs corresponding to the account information;
step 4022, according to the detergent applicable to the washing program, dividing the washing programs applicable to the same type of detergent into the same type, so as to obtain various types of washing programs.

Specifically, after the account is successfully verified, all the used washing programs corresponding to the account may be obtained. Optionally, all the used washing programs within a predetermined time, for example, within one month, may be obtained. For all the washing programs, according to the type of applicable detergent, the washing programs applicable to the same type of detergent are divided into one group as one type of washing program. For example, the washing programs of shirt washing and suit washing may be divided into the business washing type.

In this embodiment, the same type of detergent is not limited to one product, but may be multiple products with the same characteristics. For example, the detergent of the baby-friendly washing type corresponding to the washing program of the baby-friendly washing type may include a natural-washing baby-specific detergent under brand A, and may also include a baby-specific detergent under brand B, which is not limited in this embodiment.

Step 403, after the account information is successfully verified, an identification information of the detergent currently used, which is input by the user, is received.

Optionally, the identification information may be a detergent name or an identification code of detergent, such as a two-dimensional code or a bar code.

Specifically, the terminal device may receive the detergent name input by the user, and may also scan the identification code of detergent.

Step 404, the purchase link of detergent is pushed to the user according to the identification information.

In practical applications, the terminal device may also receive the currently used detergent information input by the user after the account information of the user is successfully verified so as to help the user purchase the detergent conveniently.

Step 405, a list of washing programs applicable to the detergent is pushed to the user according to the identification information.

In order to facilitate the user to select a washing program correctly, the terminal device may determine a basic information of detergent according to the identification information of detergent. The basic information may include component information, usage and dosage information of detergent, and the like. A list of washing programs applicable to the detergent is determined according to the basic information of the detergent, and the list of washing programs is pushed to the user, so as to make the user know the washing programs corresponding to the detergent and then select a suitable washing program in the subsequent washing process.

Optionally, the list of washing programs may be obtained by screening according to various washing program used by the user.

Specifically, after the terminal device according to the identification information of detergent that is provided by the user, the terminal device determines the basic information of detergent according to the identification information. The basic information may include component information, usage and dosage information of detergent, and the like, and then the type of washing program to which the detergent is applicable is determined according to the basic information of detergent. For example, the detergent is applicable to the business type washing program. One or more washing programs having a maximum usage number of user may be selected from multiple washing programs corresponding to the type of washing program to form a list of washing program and then the list of washing program is pushed to the user, so that the user can know the washing program applicable to the detergent that he currently uses through the list and use the detergent in a correct washing program.

Step 406, the N types of washing programs with the maximum usage number from the various types of washing programs are selected according to the usage number, and the prompt information of detergents respectively corresponding to the N types of washing programs is pushed to the user.

In this embodiment, step 406 is similar to step 202 in the above embodiment, and will not be repeated here.

The detergent recommendation method provided by the embodiment can push the related purchase link and the list of washing programs using the detergent to the user and facilitate the user to select the washing program reasonably by counting up the usage numbers of various types of washing programs under the account information of user, recommending the detergent to the user accurately according to a statistical result, and identifying the identification information of detergent input by the user. Thus, various adverse effects caused by the unsuitable detergent or the unsuitable washing program selected by the user are avoided.

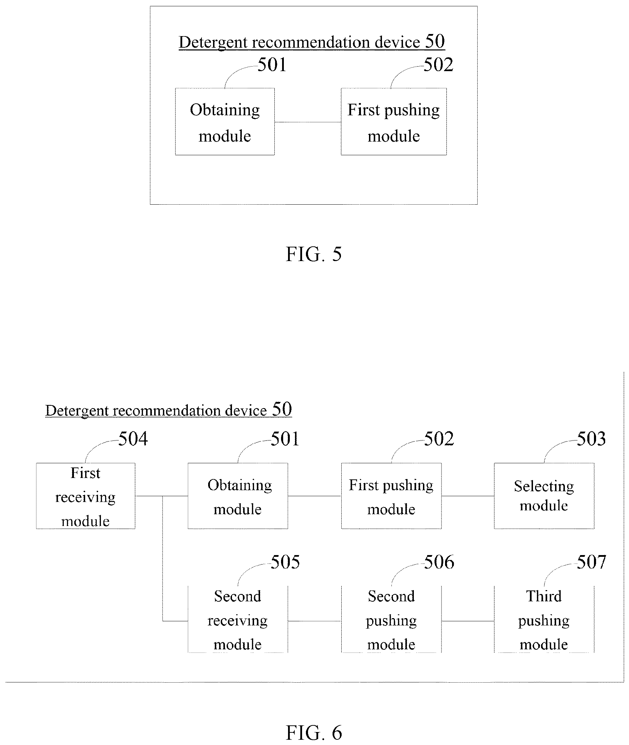

FIG. 5 is a structural schematic diagram of a detergent recommendation device provided by an embodiment of the present application. As shown in FIG. 5, the detergent recommendation device includes: an obtaining module 501 and a first pushing module 502.

The obtaining module 501 is configured to obtain the usage numbers respectively corresponding to various types of washing programs used by the user; various type of washing programs respectively correspond to different types of detergents.

The first pushing module 502 is configured to select N types of washing programs with the maximum usage number from various types of washing programs according to the usage number, and push the prompt information of detergents respectively corresponding to the N types of washing programs to the user.

The detergent recommendation device provided by the embodiment of the present invention can preferentially recommend a detergent applicable to the washing programs with relatively high operating frequency to the user by obtaining the usage numbers respectively corresponding to various types of washing programs used by the user through the obtaining module 501, wherein various types of washing programs respectively correspond to different types of detergents, and selecting N types of washing programs with the maximum usage number from various types of washing programs according to the usage number and pushing the prompt information of detergents respectively corresponding to the N types of washing programs to the user through the first pushing module 502, so that the user can use suitable detergent for washing and avoid various adverse effects caused by unsuitable selection of detergent.

FIG. 6 is a structural schematic diagram of the detergent recommendation device provided by another embodiment of the application. As shown in FIG. 6, the detergent recommendation device 50 further includes: a selecting module 503.

Optionally, each type of washing program includes at least one washing program, and the device 50 further includes:
a selecting module 503, configured to select a washing program with the maximum usage number from each type of washing program in the N types of washing programs, and push the washing program and the prompt information of detergent corresponding to this type of washing program to the user at one time.

Optionally, the device 50 further includes:
a first receiving module 504, configured to receive an account information input by a user;
the first pushing module 502, specifically configured to:
   obtain the usage numbers respectively corresponding to various types of washing programs under the account information after the account information is successfully verified.

Optionally, the first pushing module 502 is specifically configured to:
obtain all washing programs corresponding to the account information;
divide the washing programs suitable for the same type of detergent into the same type of washing program to obtain various types of washing programs, according to the detergent applicable to the washing program.

Optionally, the device 50 further includes:
a second receiving module 505, configured to receive an identification information of detergent currently used, which is input by the user, after the account information is successfully verified;
a second pushing module 506, configured to push a purchasing link of the detergent to the user according to the identification information.

Optionally, the device 50 further includes:
a third pushing module 507, configured to push a list of washing programs applicable to the detergent to the user according to the identification information; the list of washing programs is obtained by screening according to each washing program used by the user.

Optionally, various types of washing programs include at least two of the following: the ordinary washing type, the low-foaming and easy-rinsing type, the business washing type, the baby-friendly washing type and the sterilization washing type.

The detergent recommendation device provided by the embodiment of the present invention can be used to implement the above method embodiments, and its implementation principle and technical effect are similar with the above method embodiments and will be not repeated here in the embodiment.

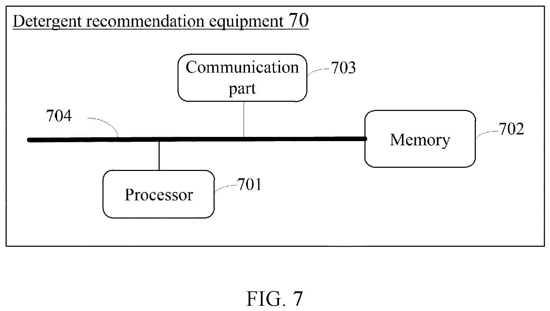

FIG. 7 is a structural schematic diagram of the hardware of the detergent recommendation device provided by another embodiment of the application. As shown in FIG. 7, the detergent recommending device 70 provided by the present embodiment includes at least one processor 701 and a memory 702. The detergent recommendation device 70 further includes a communication part 703. The processor 701, the memory 702, and the communication unit 703 are connected by a bus 704.

In a specific implementation, at least one processor 701 executes computer execution instructions stored in the memory 702, such that at least one processor 701 executes the detergent recommendation method executed by the detergent recommendation device 70 described above.

When the counting of usage number and detergent pushing of the present embodiment are performed by a server, the communication part 703 may transmit the usage number of each washing program to the server.

The specific implementation of the processor 701 may be referred to the above method embodiments, and its implementation principle and technical effect are similar with the above method embodiments and will be not repeated here in the embodiment.

In the above embodiment shown in FIG. 7, it should be understood that the processor may be a Central Processing Unit (CPU), or may also be other general-purpose processors, Digital Signal Processor (DSP), Application Specific Integrated Circuit (ASIC), etc. The general-purpose processor may be a microprocessor or may also be any conventional processor, etc. The steps of the methods disclosed in connection with the present invention may be embodied directly by the execution and completion of a hardware processor, or may be embodied by the execution and completion of a combination of hardware and software modules in a processor.

The memory may include a high speed RAM memory and may also include a non-volatile memory NVM, such as at least one disk memory.

The bus may be an Industry Standard Architecture (ISA) bus, a Peripheral Component Interconnect (PCI) bus or an Extended Industry Standard Architecture (EISA) bus, etc. The bus may be divided into an address bus, a data bus, a control bus, etc. For ease of illustration, the bus in the drawings of this application are not limited to only one piece of bus or one type of bus.

The present application also provides a computer-readable storage medium in which computer-executable instructions are stored. When the computer-executable instructions are executed by the processor, the detergent recommending method executed by the detergent recommendation device described above is realized.

The above computer-readable storage medium may be implemented by any type of volatile or nonvolatile storage device or their combination, such as a Static Random Access Memory (SRAM), an Electrically Erasable Programmable Read-Only Memory (EEPROM), an erasable programmable read-only memory (EPROM), a Programmable Read-Only Memory (PROM), a Read Only Memory (ROM), a magnetic memory, a flash memory, a magnetic disk or an optical disk. The readable storage media may be any available medium that can be accessed by a general purpose or special purpose computer.

An exemplary readable storage medium is coupled to the processor such that the processor can read information from and write information to the readable storage medium. Of course, the readable storage medium may also be a component of the processor. The processor and the readable storage medium may be located in the Application Specific Integrated Circuits (ASIC). Of course, the processor and the readable storage medium may also exist in a device as discrete components.

A person of ordinary skill in the art can understand that all or part of the steps for implementing the above method embodiments can be completed by the hardware related to program instructions. The aforementioned program may be stored in a computer readable storage medium. When the program is executed, the steps of each method embodiment described above are executed; and the aforementioned storage medium includes various media capable of storing program codes, such as a ROM, a RAM, a magnetic disk or an optical disk.

The application also provides a computer program, including program codes. When the computer runs the computer program, the program codes execute the detergent recommendation method described above.

The above descriptions are only specific embodiments of the present invention, but the protection scope of the present invention is not limited thereto. Any persons of ordinary skill in the art can easily think of changes or substitutions within the technical scope disclosed by the present invention, which should be encompassed within the protection scope of the present disclosure. Therefore, the scope of protection of the present invention should be determined according to the protection scope of the claims.

## Claims

1. A detergent recommendation method, **characterized by** comprising:
obtaining usage numbers respectively corresponding to types of washing programs used by a user, wherein the types of washing programs respectively correspond to different types of detergents;
selecting N types of washing programs with a maximum usage number from the types of washing programs according to the usage numbers, and pushing a prompt information of detergents respectively corresponding to the N types of washing programs to the user, wherein the N is a positive integer greater than or equal to 1.

2. The method according to claim 1, **characterized in that** each type of washing program comprises at least one washing program, and after the pushing the prompt information of detergents respectively corresponding to the N types of washing programs to the user, the method further comprises:
for each type of washing program in the N types of washing programs, selecting a washing program with the maximum usage number from the type of washing program, and pushing the washing program and a prompt information of a detergent corresponding to the type of washing program to the user at one time.

3. The method according to claim 1 or 2, **characterized in that** before the obtaining the usage numbers respectively corresponding to the types of washing programs used by the user, further comprising:
receiving an account information input by the user;
the obtaining the usage numbers respectively corresponding to the types of washing programs used by the user, comprising:
obtaining the usage numbers respectively corresponding to the types of washing programs under the account information after the account information is verified successfully.

4. The method according to any one of claims 1 to 3, **characterized in that** before the obtaining the usage numbers respectively corresponding to the types of washing programs under the account information, further comprising:
obtaining all washing programs corresponding to the account information;
dividing the washing programs applicable to a same type of detergent into a same type to obtain the types of washing programs according to a detergent applicable to the washing program.

5. The method according to any one of claims 1 to 4, **characterized in that** after the receiving the account information input by the user, further comprising:
after the account information is successfully verified, then receiving an identification information of currently used detergent that is input by the user;
pushing a purchase link of the detergent to the user according to the identification information.

6. The method according to any one of claims 1 to 5, **characterized in that** after the receiving the identification information of the currently used detergent that is input by the user, further comprising:
pushing a list of washing programs applicable to the detergent to the user according to the identification information.

7. The method according to any one of claims 1 to 6, **characterized in that** the types of washing programs comprise at least two of the following: an ordinary washing type, a low-foaming and easy-rinsing type, a business washing type, a baby-friendly washing type and a sterilization washing type.

8. A detergent recommendation device, **characterized by** comprising:
an obtaining module, configured to obtain usage numbers respectively corresponding to types of washing programs used by a user, wherein the types of washing programs respectively correspond to different types of detergents;
a first pushing module, configured to select N types of washing programs with a maximum usage number from the types of washing programs according to the usage numbers and push a prompt information of detergents respectively corresponding to the N types of washing programs to the user.

9. A detergent recommendation equipment, **characterized by** comprising: a processor and a memory; wherein
the memory is configured to store program codes;
the processor is configured to invoke the program codes stored in the memory to execute the method according to any one of claims 1 to 7.

10. A computer-readable storage medium, **characterized in that** instructions are stored in the computer-readable storage medium and when the instructions are run on a computer, the computer performs the method according to any one of claims 1 to 7.

11. A computer program, **characterized by** comprising program codes, wherein the program codes execute the method according to any one of claims 1 to 7 when the computer program is run by a computer.
